Europäisches Patentamt

European Patent Office

Office européen des brevets

(19)

(11) Veröffentlichungsnummer : **0 443 061 B1**

(12) # EUROPÄISCHE PATENTSCHRIFT

(45) Veröffentlichungstag der Patentschrift :
**12.10.94 Patentblatt 94/41**

(51) Int. Cl.⁵ : **H04L 1/12**

(21) Anmeldenummer : **90103357.1**

(22) Anmeldetag : **21.02.90**

(54) **Verfahren zur Anpassung der Blocklänge bei serieller Datenübertragung, mit Messverfahren für die Übertragungsgüte und bevorzugter Anwendung des Verfahrens.**

(43) Veröffentlichungstag der Anmeldung :
**28.08.91 Patentblatt 91/35**

(45) Bekanntmachung des Hinweises auf die Patenterteilung :
**12.10.94 Patentblatt 94/41**

(84) Benannte Vertragsstaaten :
**AT CH DE FR GB IT LI SE**

(56) Entgegenhaltungen :
**EP-A- 0 197 545**
**PATENT ABSTRACTS OF JAPAN, Band 10, Nr. 240 (E-429)[2296], 19. August 1986; & JP-A-6172432**

(56) Entgegenhaltungen :
**PATENT ABSTRACTS OF JAPAN, Band 10, Nr. 384 (E-466)[2441], 23. Dezember 1986; & JP-A-61 174 845**
**PROC. IEE, Band 123, Nr. 8, August 1976, Seiten 756-760, New York, US; J.A.FIELD: "Efficient computer-computer communication"**

(73) Patentinhaber : **SIEMENS AKTIENGESELLSCHAFT**
**Wittelsbacherplatz 2**
**D-80333 München (DE)**

(72) Erfinder : **Seibold, Hans, Dr. rer. nat.**
**Dahlmannstrasse 33**
**D-8500 Nürnberg 20 (DE)**

EP 0 443 061 B1

## Beschreibung

Die Erfindung betrifft gemäß dem Oberbegriff von Anspruch 1 ein Verfahren zur optimalen Anpassung der bei serieller Datenübertragung pro Telegramm übertragenen Nutzdatenmenge ("Blocklänge BL") an die aktuelle Güte einer Übertragungsstrecke. Die Erfindung betrifft gemäß dem Oberbegriff von Anspruch 5 ferner ein Verfahren zur Messung der Übertragungsgüte auf einer Übertragungsstrecke mit serieller Datenübertragung. In der EP 0 197 545 A2 werden derartige Verfahren beschrieben. Dabei wird auf der Empfangsseite für jeden Datenblock eine Blockfehlerrate bestimmt und die Telegrammlänge abhängig von der Fehlerrate angepaßt.

Die Erfindung betrifft schließlich eine bevorzugte Verwendung des Verfahrens zur Anpassung der pro Telegramm übertragenen Nutzdatenmenge.

Bei serieller Datenübertragung werden die zu übertragenden Daten in Telegramme eingeteilt und die pro Telegramm zusammengefaßte Teildatenmengen gebündelt seriell übertragen. Ein Telegramm enthält neben den eigentlichen Nutzdaten einen Anteil an Steuerinformationen, welcher zur Bewerkstelligung der Datenübertragung benötigt wird. So enthält in vielen Fällen der Telegrammkopf und das Telegrammende mindestens ein Steuerzeichen, während dazwischen eine unterschiedlich große Nutzdatenmenge, auch "Blocklänge" genannt, übertragen wird. Verfügt beispielsweise ein jedes Steuerzeichen und ein jedes Nutz-Datum über eine Datenbreite von einem Byte, so entspricht der Wert der Blocklänge der Anzahl der pro Telegramm übertragenen Nutzdaten-Bytes.

Die Steuerzeichen am Telegrammende enthalten in der Regel auch Elemente, mit deren Hilfe die Erkennung von Datenübertragungsfehlern im vorangegangenen Telegramm ermöglicht bzw. zumindest erleichtert wird. So ist es z.B. möglich, das am Telegrammende ein sogenanntes Blockprüfzeichen ("block check charcter") mit übertragen wird. Dieses ergibt sich z.B. durch spaltenweise binäre Addition der Bits in einem jeden Byte der Nutzdaten. Auf der Senderseite der seriellen Datenübertragung wird somit ein jedes Telegramm an seinem Ende ergänzt um eine Information, die auf der Empfängerseite eine Aussage darüber ermöglicht, ob die Informationen im Nutzdatenblock des Telegrammes störungsfrei übertragen wurden. Hierzu wird nach der Telegrammübertragung auf der Empfängerseite ebenfalls durch spaltenweise Addition der Bits von allen Nutzdaten-Bytes die Quersumme über den übertragenen Nutzdatenblock gebildet. Der Vergleich des übertragenen mit dem auf der Empfangsseite selbst gebildeten Prüfsummenzeichens läßt erkennen, ob die Übertragung fehlerfrei abgelaufen ist oder nicht.

Bei fehlerfreier Übertragung wird vom Datenempfänger ein positives Quittungssignal an den Datensender zurückgeleitet, der daraufhin das nächste Telegramm überträgt. Bei Vorliegen eines negativen Quittungssignals bzw. bei Ausbleiben eines Quittungssignals muß das Telegramm erneut übertragen werden. Durch derartige Übertragungs-Wiederholungen kann somit die Effizienz einer Übertragung, d.h. die auf die Gesamtanzahl an übertragenen Zeichen (Bytes) bezogene Anzahl an positiv übermittelten Nutzdaten, erheblich beeinträchtigt werden. Mit den Abkürzungen

T = H + BL:     Telegrammlänge (einschließlich Quittung)
H :     Steuerinformationen
BL :     "Blocklänge" = Nutzdatenmenge
W :     Übertragungs-Wiederholungen
E :     Effizienz der Datenübertragung

ergibt sich folgende Beziehung für die reziproke Effizienz I/E:

$$\frac{I}{E} = \frac{W \cdot (H + BL)}{BL} \quad \text{Gl.1}$$

Die Anzahl der notwendigen Wiederholungen W ist dabei zum einen von der aktuellen Leitungsübertragungsgüte abhängig. Diese wiederum bestimmt die jeweilige Größe der sogenannten Einzelbyte-Fehlerhäufigkeit EBF, d.h. der Häufigkeit, mit der bei der Übertragung irgendeines Bytes eines Telegrammes ein Fehler auftritt. Die Einzelbyte-Fehlerhäufigkeit ist somit ein Maß für die aktuelle Güte der Übertragungsstrecke. Desweiteren nimmt die Anzahl der notwendigen Wiederholungen unter der Annahme einer konstanten Einzelbyte-Fehlerhäufigkeit mit der Blocklänge BL zu. Je länger also der pro Telegramm übertragene NutzdatenBlock ist, umso größer ist bei Vorliegen einer konstanten Leitungsübertragungsgüte die Wahrscheinlichkeit, daß ein langer Datenblock nicht fehlerfrei übertragen werden kann, und seine Übertragung somit wiederholt werden muß. Unter Zuhilfenahme einer funktionalen Abhängigkeit f der Anzahl der notwendigen Wiederholungen W von der schwankenden Einzelbyte-Fehlerhäufigkeit EBF und der Blocklänge BL ergibt sich für die reziproke Effizienz I/E die Gleichung

$$\frac{I}{E} = f(EBF, BL) \cdot \frac{(H + BL)}{BL} \quad \text{Gl.2}$$

In Gl.2 stellt die die aktuelle Übertragungsgüte repräsentierende Einzelbyte-Fehlerhäufigkeit EBF in der Regel einen Meßwert dar. Desweiteren kann man davon ausgehen, daß die pro Telegramm benötigte Menge an Steuerinformationen H, d.h. die im Telegrammkopf, am Telegrammende und gegebenenfalls in Form des vom Empfänger zum Sender zurückgeschickten Quittungssignales benötigten Steuerbytes, kaum beeinflußbar und somit annähernd konstant sind. Als Variable zur Beeinflussung der Größe der Effektivität E steht somit in Gl.2 die Blocklänge BL zur Verfügung, d.h. die Menge der Nutzdaten pro Telegramm.

Die Blocklänge BL kann dabei zwischen einem unteren und oberen Grenzwert variiert werden. Der untere Grenzwert kann annähernd dadurch gekennzeichnet werden, daß die Größenordnung der pro Telegramm übertragenen Nutzdatenmenge annähernd mit der pro Telegramm benötigten Mengen an Steuerinformationen übereinstimmt. Der obere Grenzwert wird maßgeblich davon beeinflußt, daß bei zu großen Blocklängen die am Ende eines jeden Telegrammes z.B. in Form eines Blockprüfzeichens übertragene und zur Fehlererkennung dienende Steuerinformation nicht mehr mit Sicherheit das Auftreten von Fehlern anzeigen kann.

Der Erfindung liegt die Aufgabe zugrunde, abhängig vom aktuellen Wert der Übertragungsgüte die Blocklänge der Telegramme bei serieller Datenübertragung so optimal einzustellen, daß sich die in Bezug auf die Übertragungsstrecke jeweils größtmöglich zu erreichende Effizienz bei der Datenübertragung ergibt.

Die Aufgabe wird gelöst mit Hilfe des in Anspruch 1 angegebenen Verfahrens. Vorteilhafte Ausführungsformen der Erfindung, ein besonders angepaßtes Verfahren zur Messung der Übertragungsgüte auf der Übertragungsstrecke und eine bevorzugte Anwendung des erfindungsgemäßen Verfahrens sind in den Unteransprüchen angegeben.

Zur Ermittlung eines Zusammenhanges zwischen der gesuchten optimalen Blocklänge BLo und der Effizienz E kann man beispielsweise die obige Gl.2 in bekannter Weise derart auswerten, daß die reziproke Effizienz I/E ein Minimum annimmt. Hierzu wird beispielsweise die partielle Ableitung der Gl.2 nach der Blocklänge BL gebildet, gleich Null gesetzt, und diese Beziehung anschließend nach der Blocklänge BL aufgelöst. Bei Vorliegen eines nicht eindeutigen Ergebnisses muß durch Bildung einer weiteren Ableitung in bekannter Weise geprüft werden, welche Ergebnisse zu einem Minimum der reziproken Effizienz führen und somit bei gegebener Einzelbyte-Fehlerhäufigkeit EBF ein Optimum BLo der Blocklänge darstellen. Als Ergebnis derartiger Auswertungen kann sich die Beziehung

$$BLo \ = \ \frac{I}{2}H \left( -I + \sqrt{I - \frac{4}{H \cdot \ln\left(I - EBF\right)}} \ \right) \quad Gl.3$$

für die optimale Blocklänge BLo ergeben. Eine der Gl.3 entsprechende Beziehung ist in der Veröffentlichung von J.A. Field: "Efficient Computer-Computer Communication", Proc. IEE, vol.123, pp. 756-760, August 1976, gemäß der dortigen Gleichung (8) auf der Seite 757 angegeben.

Ein Problem bei obiger Gl.3 besteht darin, daß der aktuelle Wert der Einzelbyte-Fehlerhäufigkeit EBF nur schwer der direkten Messung zugänglich ist. Unter Zuhilfenahme der Beziehung

$$BF \ = \ I - \left(I - EBF\right)^T \quad Gl.4$$

mit

T = H + BL:         aktuelle Telegrammlänge (einschließlich Quittung)

EBF :         Einzelbyte-Fehlerhäufigkeit

BF :         Blockfehler-Häufigkeit

läßt sich die gesuchte optimale Blocklänge BLo ausdrücken in Abhängigkeit der neuen Variablen "Blockfehler-Häufigkeit BF". Dabei ist die Gl.4 ebenfalls an sich aus der obengenannten Veröffentlichung von J.A. Field bekannt (siehe Gl.7 auf der dortigen Seiten 757).

Nach Umstellung der Gl.4 in die Form

$$\ln\left(I - EBF\right) \ = \ \frac{\ln\left(I - BF\right)}{BL + H} \quad Gl.5$$

und Einsetzen der Gl.5 in die obige Gl.3 ergibt sich die nachfolgende neue Beziehung für die optimale Blocklänge:

$$BLo \ = \ \frac{I}{2}H \left( -I + \sqrt{I - \frac{4 \cdot \left(BL + H\right)}{H \cdot \ln\left(I - BF\right)}} \ \right) \quad Gl.6$$

Gl.6 bietet nun zwar den gewünschten Zusammenhang zwischen der einer direkten Messung leicht zugänglichen Blockfehler-Häufigkeit BF und der gesuchten optimalen Blocklänge BLo. Diese Gleichung hat aber den Nachteil, daß sie von den zwei Meßgrößen BL und BF abhängt.

Die Erfindung löst dieses Problem unter Zuhilfenahme der Gl.6 als Ausgangspunkt. Bei einer ersten, vorteilhaften Ausführung der Erfindung wird die Gl.6 zunächst unter der Annahme "wenig gestörte Leitung" linearisiert. Bei dieser Näherung wird die Häufigkeit des Auftretens eines Fehlers bei der Übertragung eines Telegrammes als relativ klein angenommen. Der Wert der Blockfehler-Häufigkeit BF ist somit klein, d.h.

$$BF \ll I \quad Gl.7$$

Hiermit ergibt sich

$$\ln\left(I - BF\right) \approx - BF \quad Gl.8$$

so daß sich Gl.6 vereinfacht zu

$$BLo = \frac{1}{2}H\,(-1 + \sqrt{1 + \frac{4\,(BL + H)}{H.BF}}\,)\quad Gl.9$$

Schließlich wird als Maß für die aktuelle Güte der Übertragungsstrecke nicht direkt der Wert der Blockfehler-Häufigkeit BF, sondern erfindungsgemäß der aktuelle Meßwert der auf die jeweilige Telegrammlänge bezogenen, normierten Blockfehler-Häufigkeit BFn verwendet.

Mit Hilfe der Beziehung

$$BFn = \frac{BF}{BL + H}\quad Gl.10$$

ergibt sich somit schließlich für die gesuchte optimale Blocklänge BLo die Beziehung

$$BLo\ \frac{1}{2}H\,(-1 + \sqrt{1 + \frac{4}{H.BFn}}\,)\quad Gl.11$$

mit der normierten Blockfehler-Häufigkeit BFn als Variable und Meßgröße. Diese Gleichung ermöglicht auf einfache Weise die erfindungsgemäße optimale Anpassung der Nutzdatenmenge pro Telegramm (Blocklänge BL) bei serieller Datenübertragung an Schwankungen der Güte der Datenübertragungsstrecke, welche sich in unterschiedlichen Werten der Meßgröße "normierte Blockfehler-Häufigkeit BFn" äußert.

Wie oben ausgeführt, wurde Gl.11 unter Zuhilfenahme der Näherung der Gl.7 gebildet, d.h. der Annahme einer wenig gestörten Leitung. In der Praxis ist diese Annahme aber nicht in allen Fällen erfüllt. Es hat sich vielmehr gezeigt, daß Fehler bei manchen seriellen Datenübertragungen "schauerartig" auftreten können, so daß sich die Güte der Datenübertragung auf der Übertragungsstrecke von ursprünglich hohen Werten schlagartig auf sehr niedrigere Werte drastisch verschlechtern kann. Bei extrem schlechter Übertragungsqualität bietet die Gl.11 aber nur ungenaue Ergebnisse für die optimierte Blocklänge BLo, da sie unter der Annahme einer guten, oder zumindest nicht sehr schlechten Übertragungsqualität linearisiert wurde.

Hierzu wird gemäß einer weiteren, vorteilhaften Ausführungsform der Erfindung vorgeschlagen, wiederum mit Hilfe der obigen Gl.6 als Ausgangspunkt diese mit Hilfe einer anderen Strategie anzunähern. Hierzu wird erfindungsgemäß Gl.6 in einem ausgewählten Arbeitspunkt betrachtet. Als ein derartiger Arbeitspunkt eignet sich besonders der Punkt, bei dem der Istwert der Blocklänge BL gerade mit dem zur jeweils vorliegenden Güte der Übertragung gehörigen Wert der optimalen Blocklänge BLo übereinstimmt, d.h.

$$BL = BLo\quad Gl.12$$

Einsetzen von Gl.12 in Gl.6 führt zunächst zu

$$BLo = \frac{1}{2}H\,(-1 + \sqrt{1 - \frac{4\,(BLo + H)}{H\,.\,\ln(1 - BF\big|_{BLo})}}\,)\quad Gl.13$$

Nach Auflösen dieser Beziehung nach der Blockfehler-Häufigkeit

$$BF\big|_{BLo}$$

im Arbeitspunkt und Normierung auf die Telegrammlänge T im Arbeitspunkt ergibt sich

$$BFno = \frac{BF\big|_{BLo}}{BLo + H} = \frac{1 - e^{-\frac{H}{BLo}}}{BLo + H}\quad Gl.14$$

Es entsteht der Wert der normierten Blockfehler-Häufigkeit BFno im anzustrebenden, optimalen Arbeitspunkt BL = BLo.

Erfindungsgemäß wird nun die im gesuchten, optimalen Arbeitspunkt BL = BLo für die normierte Blockfehler-Wahrscheinlichkeit BFno exakt gültige Beziehung nach Gl.14 näherungsweise für alle Arbeitspunkte verwendet. Gemäß der Beziehung

$$BFn = \frac{BF}{BL + H} \approx BFno = \frac{1 - e^{-\frac{H}{BLo}}}{BLo + H}\quad Gl.15$$

wird somit der Meßwert der normierten Blockfehler-Häufigkeit BFn für alle Arbeitspunkte annähernd gleich der optimalen, normierten Blockfehler-Häufigkeit BFno im Ziel-Arbeitspunkt gesetzt. Diese Näherung hat den besonderen Vorteil, daß sie nicht auf einen Extremwert z.B. guter bzw. schlechter Übertragungsgüte bezogen ist. Vielmehr dient als Normierungsoptimum gerade der zu erreichende Zielpunkt BL = BLo, so daß mit zunehmender Annäherung an den Ziel-Arbeitspunkt der durch Gl.15 gegebene Zusammenhang zwischen der gesuchten optimalen Blocklänge BLo und der erfindungsgemäß als schwankende Meßgröße dienenden normierten Blockfehler-Häufigkeit BFn zunehmend genauer wird.

Bezeichnet man den gefundenen, näherungsweise gültigen funktionalen Zusammenhang zwischen BLo und BFn mit F, d.h.

$$BLo \approx F (BFn) \quad Gl.16$$

so entspricht Gl.15 der Umkehrfunktion $F^{-1}$, d.h.

$$BFn \approx F^{-1}(BLo) = \frac{1 - e^{-\frac{H}{BLo}}}{BLo + H} \quad Gl.17$$

Es besteht nun die Möglichkeit durch Bildung der Funktion F aus der Umkehrfunktion $F^{-1}$ gemäß Gl.17 z.B. mittels numerischer Näherungsmethoden den zu einer gegebenen Übertragungsgüte, d.h. einem vorliegenden Meßwert der normierten Blockfehler-Häufigkeit BFn, gehörigen Wert der optimalen Blocklänge BLo zu ermitteln.

Bei einer anderen Ausführung kann auch direkt die Umkehrfunktion $F^{-1}$ gemäß Gl.17 herangezogen werden. Hierzu kann beispielsweise punktförmig der Wertebereich der Blocklänge BL mit Hilfe der Gl.17 in einen dazugehörigen Wertebereich der normimerten Blockfehler-Häufigkeit BFn abgebildet werden. Es ergeben sich somit zwei Tabellen, welche bevorzugt in elektronische Speichermedien vorrätig gehalten werden können. Einem jedem Element BFn der Blockfehler-Häufigkeitstabelle ist ein Element der Blocklängen-Tabelle zugeordnet. Ein solches Element wird dann als optimale Blocklänge BLo zur Bildung eines Telegrammes herangezogen, wenn der aktuelle Meßwert der normierten Blockfehler-Häufigkeit BFn mit dem zugehörigen Wert in der Blockfehler-Häufigkeitstabelle annähernd übereinstimmt.

Bei einer weiteren, besonders vorteilhaften Ausführungsform wird der Wertebereich der Blocklänge BL in Blocklängen-Intervalle aufgeteilt, und einem jeden Intervall ein diskreter Blocklängenwert zugeordnet. So sind beispielsweise den Blocklängen-Intervallen BL(I1) ... BL(I6) gemäß folgender Tabelle

$$
\begin{array}{lllll}
BL(I1) & : & 0 \ldots\ldots 4.\sqrt{2} & : & BL(d1) = 4 \\
BL(I2) & : & 4.\sqrt{2} \ldots 8.\sqrt{2} & : & BL(d2) = 8 \\
BL(I3) & : & 8.\sqrt{2} \ldots 16.\sqrt{2} & : & BL(d3) = 16 \\
BL(I4) & : & \ldots\ldots & : & BL(d4) = 32 \\
BL(I5) & : & \ldots\ldots & : & BL(d5) = 64 \\
BL(I6) & : & \ldots\ldots & : & BL(d6) = 128 \\
\end{array}
$$

die diskreten Blocklängenwerte BL(d1) ... BL(d6) mit den Werten 4,8,...,128 zugeordnet. Mit Hilfe einer der obigen erfindungsgemäßen Beziehungen zwischen dem Meßwert der normierten Blockfehler-Häufigkeit BFn und der optimalen Blocklänge BLo, z.B. der Gl.11 bzw. den Gl.16 und 17, wird zu jedem Blocklängen-Intervall das dazugehörige Intervall für den Wert der normierten Blockfehler-Häufigkeit gebildet. So gehören beispielsweise für H = 7 Bytes die nachfolgenden Blockfehler-Häufigkeits-Intervalle BFn(I1) ... BFn(I3)

$$
\begin{array}{llll}
BFn(I1) & : & \dfrac{1}{0,6 \cdot 32} \ldots & \dfrac{1}{7} \\[3mm]
BFn(I2) & : & \dfrac{1}{1,2 \cdot 32} \ldots & \dfrac{1}{0,6 \cdot 32} \\[3mm]
BFn(I3) & : & \dfrac{1}{3,5 \cdot 32} \ldots & \dfrac{1}{1,2 \cdot 32} \\
\end{array}
$$

mittels Gl.17 zu den obigen Blocklängen-Intervallen BL(I1) ...BL(I3).

Zur Vorgabe der Nutzdatenlänge pro Telegramm einer seriellen Datenübertragung wird nun der diskrete Blocklängenwert BL(d1) ... BL(d6) als optimale Blocklänge BLo herangezogen, in dessen Blockfehler-Häufigkeitsintervall gerade der aktuelle Meßwert der normierten Blockfehler-Häufigkeit BFn liegt. Dieser Meßwert dient somit als eine Art Zeiger zur Bestimmung des dazugehörigen Blockfehler-Häufigkeits-Intervalles, des dazugehörigen Blocklängen-Intervalles und schließlich des dazugehörigen, als optimale Blocklänge dienenden diskreten Blocklängenwertes. Diese Ausführungsform der Erfindung hat den besonderen Vorteil, das sie besonders einfach mit Hilfe eines programmgesteuerten Rechners ausführbar ist, der nur über eine begrenzte Verarbeitungsbreite von z.B. 8 bit verfügt, und der nur beschränkte Arithmetikfunktionen z.B. im Rahmen der sogenannten Ganzzahlenarithmetik, bereitstellt. Mit einem derartigen "Microcontroller" wären Direktauswertungen z.B. der Gl. 11, 16 oder 17 mit Hilfe numerischer Iterationsverfahren nur beschränkt ausführbar. Dagegen kann das erfindungsgemäße Verfahren unter Zuhilfenahme der Strukturierung aller Wertebereiche in Blocklängen- und Blockfehler-Häufigkeits-Intervalle mit zugeordneten diskreten Blocklängenwerten schnell und mit ausreichender Genauigkeit durchgeführt werden.

In der Praxis wird man zu Beginn einer seriellen Datenübertragung zur Bildung der Telegramme eine Blocklänge BL auswählen, die möglichst in der Mitte des insgesamt zur Verfügung stehenden Wertebereiches liegt. In der obigen Tabelle eignet sich somit als Startwert für die Blocklänge BL besonders der diskrete Blocklängenwert BL(d4) = 32. Falls nach Übertragung mindestens eines Telegramms ein erster Meßwert für die normierte Blockfehler-Häufigkeit BFn zur Verfügung steht, kann bereits bei der Bildung des folgenden Telegrammes die Blocklänge durch Einsatz eines größeren oder kleineren diskreten Blocklängenwertes optimiert werden. Das erfindungsgemäße Verfahren hat den besonderen Vorteil, daß praktisch die Länge eines jeden der in der seriellen Datenübertragung aufeinanderfolgenden Telegramme durch geeignete Auswahl des entsprechenden diskreten Blocklängenwertes unter Zuhilfenahme des Meßwertes der normierten Blockfehler-Häufigkeit optimal angepaßt werden kann.

Die Erfindung betrifft desweiteren ein besonders angepaßtes Verfahren zur Messung des aktuellen Wertes der normierten Blockfehler-Häufigkeit BFn, welche ein Maß für die jeweilige Güte der Datenübertragungsverbindung darstellt. Hierzu werden zwei Zähler verwendet, deren Inhalte nach der Übertragung eine jeden Telegrammes aktualisiert werden. Dies ist zum einen ein sogenannter "Blockfehler-Zähler", dessen Inhalt FZ(n) gebildet wird mit Hilfe der Beziehung:

$$FZ(n) = A1 \cdot \Delta BF + B1 \cdot FZ(n-I) \quad Gl.18$$

Dabei bedeutet FZ(n-I) der Zählerstand nach der vorangegangenen Übertragung, und FZ(n) der nach Abschluß der aktuellen Übertragung korrigierte neue Zählerstand. Ein Blockfehler-Erkennungssignal $\Delta BF$ nimmt die binären Werte O bzw. I abhängig davon an, ob am Ende der aktuellen Übertragung ein Blockfehler aufgetreten ist oder nicht. Bei Detektion eines Blockfehlers wird der Inhalt FZ(n) zunächst um die Größe des Amplitudenfaktors A1 erhöht, während bei fehlerfreier Übertragung der Amplitudenfaktor mit O bewertet und somit nichts zum Inhalt des Fehlerzählers hinzugezählt wird. In diesem Fall entspricht der Fehlerzählerstand FZ(n) dem mit einem zwischen O und I liegenden Dämpfungsfaktor B1 bewerteten Zählerstand FZ(n-I) der vorangegangenen Übertragung. Der Inhalt FZ(n) des Fehlerzählers wird somit gemäß Gl.18 pro fehlerhafter Übertragung um den Amplitudenfaktor A1 erhöht. Gleichzeitig wird pro Übertragung die sogenannte "Vorgeschichte" FZ(n-I) mit dem Dämpfungsfaktor B1 bewertet berücksichtigt. Man erkennt, daß bei ungestörter Übertragung, wobei das Blockfehler-Erkennungssignal $\Delta BF$ ständig gleich O ist, der Inhalt FZ(n) des Fehlerzählers gegen O konvergiert. Im Vergleich dazu wird dieser bei vollkommen gestörter Übertragung, wobei das Blockfehler-Erkennungssignal $\Delta BF$ ständig den Wert I hat, auf einen vom Amplitudenfaktor A1 und dem Dämpfungsfaktor B1 abhängigen stationären Wert konvergieren.

Zur Bildung des Meßwertes der normierten Blockfehler-Häufigkeit wird erfindungsgemäß desweiteren ein sogenannter "Telegrammlängen-Zähler" verwendet. Dessen Inhalt BZ(n) wird nach folgender Beziehung gebildet

$$BZ(n) = A2 \cdot T(n) + B2 \cdot BZ(n-I) \quad Gl.19$$

Pro Übertragung wird der Zählerstand um die mit einem Amplitudenfaktor A2 bewertete aktuelle Telegrammlänge (einschließlich Quittung) T(n) erhöht. Gleichzeitig wird die "Vorgeschichte", d.h. der Zählerstand BZ(n-I) der vorangegangenen Übertragung mit einem Dämpfungsfaktor B2 mit einer Größe zwischen O und I bewertet berücksichtigt.

Der gesuchte Meßwert der normierten Blockfehler-Häufigkeit BFn(n) für jede Übertragung I ... n ergibt sich schließlich durch Quotientenbildung der beiden Zählerstände, d.h.

$$BFn(n) = K \cdot \frac{FZ(n)}{BZ(n)} \quad Gl.20$$

Dabei ist K ein Normierungsfaktor, der bevorzugt so gewählt wird, daß der sich für die normierte Blockfehler-Häufigkeit BFn ergebende Wertebereich mit Hilfe der zur Verfügung stehenden Verarbeitungsbreite eines programmgesteuerten Rechners zur Ausführung des erfindungsgemäßen Verfahrens verarbeitet werden kann.

Bei einer weiteren Ausführungsform der Erfindung werden die Größen der zur Bildung des Inhaltes des

6

Blockfehler-Zählers und des Telegrammlängen-Zählers benötigten Dämpfungsfaktoren B1 und B2 gleich groß gewählt.

Gemäß einer weiteren Ausführung der Erfindung werden die Faktoren A1, B1, A2, B2 und K in den Gleichungen 18, 19 und 20 im Hinblick auf den stationär eingeschwungenen Zustand der Übertragung besonders ausgewählt. Dieser läßt sich unter der idealisierten Annahme, daß das Blockfehler-Erkennungssignal ΔBF jeden Wert zwischen O und I annehmen kann, mit Hilfe der nachfolgenden Beziehungen beschrieben:

$$FZ(n) = FZ(n - I) \text{ mit } O \leqq \Delta BF \leqq I \quad Gl.21$$
$$BZ(n) = BZ(n - I) \quad Gl.22$$

Wird die Gl.21 in der Gl.18 berücksichtigt, so ergibt sich der Quotient aus dem Amplitudenfaktor A1 und I - B1 als eine Art Verstärkungsfaktor zwischen dem stationären Inhalt FZ des Blockfehler-Zählers und dem Blockfehler-Erkennungssignal ΔBF, d.h.

$$FZ = \frac{A1}{I - B1} \cdot \Delta BF \quad Gl.23$$

Entsprechend ergibt sich aus Gl.22 und 19 für den stationären Inhalt des Telegrammlängenzählers

$$BZ = \frac{A2}{(I - B2)} \cdot T(n) \quad Gl.24$$

Der Normierungsfaktor in Gl.20 ist nun bestimmt durch

$$BF(n) = \frac{FS}{BZ} = \frac{\Delta BF}{T(n)} \quad Gl.25$$

so daß sich ergibt

$$K = \frac{(I - B1) \cdot A2}{A1 \cdot (I - B2)} \quad Gl.26$$

Die in dem nachfolgenden Beispiel angegebenen Zahlenwerte für die einzelnen Faktoren sind so gewählt, daß die oben angegebene Gl.26 erfüllt wird.

Beispiel:

$$A1 = 8; \qquad B1 = \frac{3}{4}$$

$$A2 = \frac{1}{4}; \qquad B2 = \frac{3}{4}$$

$$K = \frac{1}{32}$$

Das erfindungsgemäße Verfahren zur optimalen Anpassung der Blocklänge an die aktuelle Güte einer Datenübertragungsstrecke kann besonders vorteilhaft bei einem sogenannten "Telekommunikations-Gerät" oder "Teleservice-Gerät" angewendet werden. Dieses ermöglicht eine Datenübertragungs-Verbindung, insbesondere per Telefon, zwischen unter Umständen weit entfernten, programmgesteuerten Automatisierungsgeräten insbesondere zur Echtzeitführung technischer Prozesse und mindestens einem zentralen Diagnosegerät.

Besonders bei programmgesteuerten Automatisierungsgeräten zur Echtzeitführung von technischen Prozessen, z.B. Prozeßrechnern oder speicherprogrammierten Steuerungen, ist das Auftreten von Fehlern irgendwelcher Art besonders problematisch, da diese in aller Regel einen Stillstand der jeweiligen Produktionsanlage zur Folge haben. Derartige Anlagen-Stillstände müssen aber zur Minimierung der hierdurch verursachten Produktionsausfall-Verluste möglichst umgehend behoben werden. In aller Regel mußte hierzu ein Service-Techniker in Marsch gesetzt werden. Dabei besteht zum einen das Problem, daß der Service-Techniker unter Umständen einen sehr weiten Weg von seinem Aufenthaltsort bis zum Standort des mit dem programmgesteuerten Automatisierungsgerät ausgerüsteten, gestörten technischen Prozesses zurücklegen muß. Zudem besteht für ihn erst nach Ankunft auf der Anlage die Möglichkeit, die Fehlerursache zu analysieren und geeignete Maßnahmen zu ihrer Behebung zu ergreifen. Falls hierzu spezielle Ersatzteile benötigt werden, so entsteht durch deren Anforderung durch den vor Ort befindlichen Service-Techniker ein weiterer, unter Umständen erheblicher Zeitverlust.

Mit Hilfe eines Teleservice-Gerätes kann dagegen eine Datenfernübertragungs-Verbindung zwischen dem programmgesteuerten Automatisierungsgerät auf der Anlage und mindestens einem, z.B. beim Hersteller des Automatisierungsgerätes zentral befindlichen Diagnosegerätes aufgebaut werden. Hierdurch ist es nahezu unmittelbar nach Ausfall des Automatisierungsgerätes möglich, über die Datenübertragungs-Verbindung eine Fehlersuche mit Hilfe des zentralen Diagnosegerätes durchzuführen. Hierbei kann es sich zum einen um Störungen der Hardware des Automatisierungsgerätes, den Betriebsmitteln des technischen Prozesses bzw. den zwischen Automatisierungsgerät und Prozeß liegenden Prozeßschnittstellen-Steuermitteln handeln. In einem einfachen Fall befindet sich eines dieser Geräte lediglich in einem falschen Betriebszustand und kann gegebenenfalls durch Fernumschaltung mit Hilfe des zentralen Diagnosegerätes in einen aktiven Betriebszustand zurückgeschaltet werden. Zumindest können defekte Betriebsmittel sowohl auf der Seite des technischen Prozesses als auch auf der Seite des Automatisierungsgerätes mit dem Diagnosegerät erkannt werden.

Desweiteren können die im Automatisierungsgerät geladenen Anwenderprogramme, Betriebssysteme und Datensätze fehlerhaft bzw. gestört sein. Mit Hilfe des zentralen Diagnosegerätes besteht hierbei die Möglichkeit, fehlerhafte Programmteile direkt zu korrigieren, oder im Extremfall komplett neue Programme zu laden.

Falls die Störung des Automatisierungsgerätes und/oder des davon geführten technischen Prozesses mit Hilfe des Diagnosegerätes über die Datenübertragungsverbindung behoben werden kann, so besteht desweiteren die Möglichkeit, den Prozeß on-line für eine gewisse Zeit zu beobachten, um die Wirkung der getroffenen Maßnahmen zur Fehlerbehebung und somit die dauerhafte Betriebsfähigkeit des technischen Prozesses zu gewährleisten.

In den beschriebenen Fällen müssen in aller Regel eine Vielzahl von Daten zwischen dem programmgesteuerten Automatisierungsgerät und dem zentralen Diagnosegerät über die serielle Datenübertragungs-Verbindung ausgetauscht werden. Bei großen Entfernungen kann es sich um eine Satelliten-Funkverbindung zwischen dem programmgesteuerten Automatisierungsgerät und dem zentralen Diagnosegerät als Datenübertragungsstrecke handeln. Die Verwendung des erfindungsgemäßen Verfahrens in Teleservice-Geräten, von denen jeweils ein Exemplar an das Automatisierungsgerät und eines an das zentrale Diagnosegerät angekoppelt ist, hat somit den besonderen Vorteil, daß unabhängig von der aktuellen Güte der Datenübertragungsstrecke eine optimale Kommunikation zwischen Automatisierungsgerät und Diagnosegerät im Hinblick auf eine schnellstmögliche Fehlererkennung und gegebenenfalls Beseitigung ermöglicht wird.

## Patentansprüche

1. Verfahren zur optimalen Anpassung der bei serieller Datenübertragung pro Telegramm übertragenen Nutzdatenmenge ("Blocklänge BL") an die aktuelle Güte einer Übertragungsstrecke, dadurch gekennzeichnet, daß zur Bestimmung der optimalen Blocklänge (BLo) der Meßwert der auf die jeweilige Telegrammlänge (BL + H) bezogenen, normierten Blockfehler-Häufigkeit (BFn) als Maß für die aktuelle Güte der Übertragungsstrecke dient.

2. Verfahren nach Anspruch 1, **dadurch gekennzeichnet**, daß die Bestimmung der optimalen Blocklänge (BLo) erfolgt nach der Beziehung

$$BLo \approx \frac{1}{2}H \cdot \left( -1 + \sqrt{1 + \frac{4}{H \cdot BFn}} \right) \quad (Gl.11)$$

H:          Anzahl an Steuerinformationen
BFn:       normierte Blockfehler-Häufigkeit

3. Verfahren nach Anspruch 1, **dadurch gekennzeichnet,** daß die Bestimmung der optimalen Blocklänge (BLo) erfolgt nach der Beziehung

$$BLo \approx F(BFn) \quad (Gl.16)$$

mit

$$BFn \approx F^{-1}(BLo) = \frac{1 - e^{-\frac{H}{BLo}}}{BLo + H} \quad (Gl.17)$$

H:          Anzahl an Steuerinformationen
BFn:       normierte Blockfehler-Häufigkeit.

4. Verfahren nach einem der Ansprüche 1 bis 3, **dadurch gekennzeichnet, daß**
a) der Wertebereich der Blocklänge (BL) in Blocklängen-Intervalle (BL(I1),BL(I2),...) aufgeteilt und jedem Intervall ein diskreter Blocklängenwert (BL(d1),BL(d2),...) zugeordnet ist, und
b) mit Hilfe der Beziehung (Gl.11,17) zwischen der normierten Blockfehler-Häufigkeit (BFn) und der optimalen Blocklänge (BLo) zu jedem Blocklängen-Intervall ein dazugehöriges Intervall (BFn(I1),BFn(I2),...) für den Wert der normierten Blockfehler-Häufigkeit (BFn) gebildet wird, und
c) jeweils der diskrete Blocklängenwert (BL(d1),...) als optimale Blocklänge (BLo) zur Bildung der Telegramme herangezogen wird, in dessen Blockfehler-Häufigkeits-Intervall (BFn(I1),...) der aktuelle Wert der normierten Blockfehler-Häufigkeit (BFn) liegt.

5. Verfahren zur Messung der Übertragungsgüte auf einer Übertragungsstrecke mit serieller Datenübertragung, dadurch gekennzeichnet, daß der Wert der auf die aktuelle Telegrammlänge (BL + H) bezogenen, normierten Blockfehler-Häufigkeit (BFn) als Maß für die aktuelle Güte der Übertragungsstrecke dient, und pro Übertragung (n)

a) der Inhalt (FZ(n)) eines Blockfehler-Zählers aktualisiert wird, mit

$$FZ(n) = A1 . \Delta BF + B1 . FZ(n - I) \quad (Gl.18)$$

| | |
|---|---|
| FZ(n): | korrigierter Zählerstand nach aktueller Übertragung |
| FZ(n-I): | Zählerstand nach vorangegangener Übertragung |
| $\Delta$BF: | Blockfehler-Erkennungssignal |
| A1: | Amplitudenfaktor |
| B1: | Dämpfungsfaktor, |

b) der Inhalt BZ(n) eines Telegrammlängen-Zählers aktualisiert wird, mit

$$BZ(n) = A2 . T(n) + B2 . BZ(n - I) \quad (Gl.19)$$

| | |
|---|---|
| BZ(n) : | korrigierter Zählerstand nach aktueller Übertragung |
| BZ(n-I): | Zählerstand nach vorangegangener Übertragung |
| T(n) : | Telegrammlänge der aktuellen Übertragung |
| A2 : | Amplitudenfaktor |
| B2 : | Dämpfungsfaktor          , und |

c) der Meßwert der normierten Blockfehler-Häufigkeit BFn(n) sich pro Übertragung (n) ergibt zu

$$BFn(n) = K . \frac{FZ(n)}{BZ(n)} \quad (Gl.20)$$

K:          Normierungsfaktor.

6. Verfahren nach Anspruch 5, **dadurch gekennzeichnet,** daß die Dämpfungsfaktoren (B1,B2) für den Blockfehler- und Telegrammlängen-Zähler identisch gewählt werden (B1 = B2).

7. Verfahren nach Anspruch 5 oder 6, **dadurch gekennzeichnet**, daß die Amplituden- und Dämpfungsfaktoren (A1,A2,B1,B2) für den Blockfehler- und den Telegrammlängen-Zähler, und der Normierungsfaktor (K) so gewählt werden, daß im stationär eingeschwungenen Zustand der Übertragung die Beziehung

$$K = \frac{(I - B1) A2}{A1 . (I - B2)} \quad (Gl.26)$$

erfüllt ist.

8. Anwendung des Verfahrens nach einem der vorangegangenen Ansprüche 1 bis 4 bei einem Teleservice-Gerät, welches eine serielle Datenübertragungs-Verbindung, insbesondere per Telefon, zwischen mindestens einem, u.U. weit entfernten, programmgesteuerten Automatisierungsgerät insbesondere zur Echtzeitführung technischer Prozesse und mindestens einem zentralen Diagnosegerät ermöglicht.

## Claims

1. A method of optimally adapting the quantity of user data transmitted in each message during serial data transmission ("block length BL") to the current quality of a transmission link, characterised in that in order to determine the optimal block length (BLo) the measured value of the scaled block error frequency (BFn), relative to the respective message length (BL + H), serves as a gauge of the current quality of the transmission link.

2. A method as claimed in Claim 1, characterised in that the optimal block length (BLo) is determined in accordance with the relation

$$BLo \approx \frac{I}{2}H . ( -I + \sqrt{I + \frac{4}{H . BFn}} ) \quad (Equ. 11)$$

| | |
|---|---|
| H: | number of items of control information |
| BFn: | scaled block error frequency. |

3. A method as claimed in Claim 1, characterised in that the optimal block length (BLo) is determined in ac-

cordance with the relation

$$BLo \approx F (BFn) \quad (Equ. 16)$$

with

$$BFn \approx F^{-1} (BLo) = \frac{I - e^{-\frac{H}{BLo}}}{BLo + H} \quad (Equ. 17)$$

H:        number of items of control information
BFn:      scaled block error frequency.

**4.** A method as claimed in one of Claims 1 to 3, characterised in that

a) the value range of the block length (BL) is divided into block length intervals (BL(I1),BL(I2),...) and a discrete block length value (BL(d1),BL(d2),...) is assigned to each interval, and

b) with the aid of the relation (Equation 11, 17) between the scaled block error frequency (BFn) and the optimal block length (BLo) in respect of each block length interval an associated interval (BFn(I1),BFn(I2),...) is formed for the value of the scaled block error frequency (BFn), and

c) the respective discrete block length value (BL(d1),..), in whose block error frequency interval (BFn(I1),..) the current value of the scaled block error frequency (BFn) occurs, is used as optimal block length (BLo) for the formation of the messages.

**5.** A method of measuring the transmission quality on a transmission link with serial data transmission, characterised in that the value of the scaled block error frequency (BFn), relative to the current message length (BL + H), serves as a gauge of the current quality of the transmission link, and in respect of each transmission (n)

a) the content (FZ(n)) of a block error counter is updated, where

$$Fz(n) = A1 . \Delta BF = B1 . FZ(n-1) \quad (Equ. 18)$$

FZ(n):          corrected count after current transmission
FZ(n-1) :      count after previous transmission
$\Delta$BF:          block error recognition signal
A1:           amplitude factor
B1:           damping factor

b) the content BZ(n) of a message length counter is updated, where

$$BZ(n) = A2 . T(n) + B2 . BZ(n-1) \quad (Equ. 19)$$

BZ(n):          corrected count after current transmission
BZ(n-1) :      count after previous transmission
T(n):          message length of current transmission
A2:           amplitude factor
B2:           damping factor and

c) the measured value of the scaled block error frequency BFn(n) in respect of each transmission (n) is

$$BFn(n) = K . \frac{FZ(n)}{BZ(n)} \quad (Equ. 20)$$

K:        scaling factor.

**6.** A method as claimed in Claim 5, characterised in that the damping factors (B1, B2) for the block error- and message length counter are selected as identical (B1 = B2).

**7.** A method as claimed in Claim 5 or 6, characterised in that the amplitude- and damping factors (A1, A2, B1, B2) for the block error- and message length counter, and the scaling factor (K) are selected such that in the stationary, steady-state condition of the transmission the relation

$$K = \frac{(1 - B1) . A2}{A1 . (1 - B2)} \quad (Equ. 26)$$

is fulfilled.

**8.** The application of the method claimed in one of the preceding Claims 1 to 4 in a teleservice device which facilitates a serial data transmission connection, in particular by telephone, between at least one, possibly far away, programme-controlled automation device, in particular for the real time control of technical processes, and at least one central diagnostic device.

**Revendications**

1. Procédé pour adapter de façon optimale la quantité de données utiles ("longueur de bloc BL"), transmise lors d'une transmission de données en série, au facteur de qualité actuel d'une voie de transmission, caractérisé par le fait que pour la détermination de la longueur de bloc optimale (BLo), la valeur de mesure de la fréquence normalisée (BFn) des erreurs de bloc, qui est rapportée à la longueur respective de télégramme (BL + H), est utilisée en tant que mesure du facteur de qualité réel de la voie de transmission.

2. Procédé suivant la revendication 1, caractérisé par le fait que la détermination de la longueur de bloc optimale (BLo) s'effectue conformément à la relation

$$BLo \approx \frac{I}{2} H \cdot ( -I + \sqrt{I + \frac{4}{H \cdot BFn}} ) \quad \text{(Relation 11)}$$

H: nombre des informations de commande
BFn : fréquence normalisée des erreurs de blocs.

3. Procédé suivant la revendication 1, caractérisé par le fait que la détermination de la longueur de bloc optimale (BLo) s'effectue conformément à la relation

$$BLo \approx F (BFn) \quad \text{(Relation 16)}$$

avec

$$BFn \approx F^{-I} (BLo) = \frac{I - e^{-\frac{H}{BLo}}}{BLo + H} \quad \text{(Relation 17)}$$

H: nombre des informations de commande
BFn : fréquence normalisée des erreurs de blocs.

4. Procédé suivant l'une des revendications 1 à 3, caractérisé par le fait que
   a) la gamme de valeurs de la longueur de bloc (BL) est divisée en des intervalles de longueur de bloc (BL(I1), BL(I2),...) et une valeur discrète de longueur de bloc (BL(d1),BL(d2), ...) est associée à chaque intervalle et
   b) à l'aide de la relation (relation 11,17) entre la fréquence normalisée (BFn) d'erreurs de bloc et la longueur de bloc optimale (BLo), pour chaque intervalle de longueur de bloc un intervalle associé (BFn(I1), BFn(I2),...) est formé pour la valeur de la fréquence normalisée (BFn) d'erreurs de bloc, et
   c) respectivement la valeur discrète de longueur de bloc (BL(d1,...) est utilisée en tant que longueur de bloc optimale (Blo) pour la formation des télégrammes, et dans l'intervalle (BFn(I1),...) où se situe cette valeur de la fréquence d'erreurs de bloc, se situe la valeur actuelle de la fréquence normalisée (BFn) des erreurs de bloc.

5. Procédé pour mesurer la qualité de transmission dans une voie de transmission avec transmission de données en série, caractérisé par le fait que la valeur de la fréquence normalisée (BFn) d'erreurs de bloc, rapportée à la longueur de télégramme actuelle (+H) est utilisée comme mesure du facteur de la qualité actuelle de la voie de transmission, et pour chaque transmission (n)
   a) le contenu (FZ(n)) d'un compteur d'erreurs de bloc est actualisé, avec

$$FZ(n) = A1 \cdot \Delta BF + B1 \cdot FZ(n-1) \quad \text{(Relation 18)}$$

   FZ(n): état corrigé du compteur après la transmission actuelle,
   FZ(n-1): état du compteur après la transmission précédente,
   $\Delta$BF: signal d'identification d'erreur de bloc,
   A1 : facteur d'amplitude,
   B1: facteur d'affaiblissement,
   b) le contenu (BZ) d'un compteur de longueurs de télégrammes est actualisé, avec

$$BZ(n) = A2 \cdot T(n) + B2 \cdot BZ(n-1) \quad \text{(Relation 19)}$$

   BZ(n): état corrigé du compteur après la transmission actuelle,
   BZ(n-1) : état du compteur après la transmission précédente,
   T(n): longueur de télégramme de la transmission actuelle
   A2 : facteur d'amplitude
   B2 : facteur d'affaiblissement, et
   c) la valeur de mesure de la fréquence normalisée (BF(n)) d'erreurs de bloc est fournie, pour chaque transmission (n), par

$$BFn(n) = K \cdot \frac{FZ(n)}{BZ(n)} \quad \text{(Relation 20)}$$

K: facteur de normalisation.

6.  Procédé suivant la revendication 5, caractérisé par le fait que les facteurs d'affaiblissement (B1, B2) pour le compteur d'erreurs de bloc et de longueurs de télégrammes sont choisis identiques (B1 = B2).

7.  Procédé suivant la revendication 5 ou 6, caractérisé par le fait que les facteurs d'amplitude et d'affaiblissement (A1, A2, B1, B2) pour les compteurs d'erreurs de bloc et les compteurs de longueurs de télégrammes, et le facteur de normalisation (K) sont choisis de telle sorte que, dans l'état stationnaire de la transmission, la relation

$$K \ = \ \frac{(I - B1) \, A2}{A1 \, . \, (I - B2)} \quad \text{(Relation 26)}$$

est satisfaite.

8.  Application du procédé suivant l'une des revendications précédentes 1 à 4 dans le cas d'un appareil de téléservice, qui permet une liaison de transmission de données en série, notamment par téléphone, entre au moins un appareil d'automatisation commandé par programme, éventuellement très éloigné, utilisé notamment pour l'exécution en temps réel du processus technique, et au moins un appareil de diagnostic central.